# EUROPEAN PATENT SPECIFICATION

(11) **EP 4 170 217 B1**
(45) Date of publication and mention of the grant of the patent: **04.12.2024**
(21) Application number: 22199589.7
(22) Date of filing: 04.10.2022
(51) Int. Cl.: F16L 37/20

(54) **CONDUIT COUPLING, CONDUIT COUPLING MEMBER, AND CONDUIT**
LEITUNGSKUPPLUNG, LEITUNGSKUPPLUNGSGLIED UND LEITUNG
RACCORD DE CONDUIT, ÉLÉMENT DE RACCORD DE CONDUIT ET CONDUIT

(30) Priority: 20.10.2021 NL 2029475
(43) Date of publication of application: 26.04.2023
(73) Proprietor: B.B.A. Participaties B.V., 7382 AJ Klarenbeek (NL)
(72) Inventor: BRUIN, Johannes, 7325 WV APELDOORN (NL)
(74) Representative: Geurts, Franciscus Antonius

(56) References cited:
- DE-A1- 1 650 030
- DE-A1- 3 613 330
- DE-U1- 8 229 357
- US-A1- 2006 131 876

## Description

### BACKGROUND

The invention relates to a conduit coupling for coupling two conduit sections to each other, a conduit coupling member for use in the conduit coupling, and a conduit comprising the conduit coupling or the conduit coupling member.

A known conduit coupling comprises a first conduit coupling member having a circumferential receiving collar, a second conduit coupling member having a coupling section facing the first coupling end, and a securing or clamping arrangement. The clamping arrangement comprises two securing members or claws that are pivotably connected to the first conduit coupling member at opposite sides thereof, and a circumferential clamping ridge at the outer surface of coupling section of the second conduit coupling member. The claws can hook behind and engage with the clamping ridge to secure the first coupling end and the second coupling end together, to thereby couple the two conduit sections.

A conduit coupling according to the preamble of independent claim 1 is known from DE 82 29 357 U1.

### SUMMARY OF THE INVENTION

A disadvantage of the known conduit coupling is that during use, handling and transportation it can get easily damaged, for instance when the conduit coupling or parts thereof are dropped on a floor surface. The damaged conduit coupling may cause ill fitment between the receiving collar of the first conduit coupling member and the coupling section of the second conduit coupling member, as the dimensions of the damaged conduit coupling may fall outside the fitting tolerances thereof. The ill fitment can for instance cause a leaking or non-watertight coupling between the conduit sections. The ill fitment can also make it harder, or even impossible, to fit the receiving collar and the coupling section together

It is an object of the present invention to provide a conduit coupling, a conduit coupling member, and a conduit that are less prone to damage.

According to a first aspect, the invention provides a conduit coupling for coupling a first conduit section and a second conduit section, wherein the conduit coupling comprises a first conduit coupling member configured for being arranged on the first conduit section, and a securing arrangement for securing the first conduit coupling member to a second conduit coupling member on the second conduit section, wherein the first conduit coupling member comprises a first coupling tube with a longitudinal center axis, and that merges into a circumferential receiving collar for receiving a distal end of the second conduit coupling member, and a circumferential distal edge that defines a receiving opening towards the receiving collar, wherein the securing arrangement comprises two claws that are provided outside the first coupling tube at opposite sides of the longitudinal center axis, wherein the respective claws extend over the receiving collar and beyond the distal edge, wherein the first conduit coupling member comprises at least one guard block on the receiving collar to reinforce the receiving collar, wherein the at least one guard block outwardly protrudes with respect to the receiving collar, and is provided in a circumferential direction of the receiving collar between the respective claws, wherein the receiving collar is convex in a direction away from the longitudinal center axis, and has a circumferential apex at a distance from the distal edge, and wherein the guard block is provided between the apex and the distal edge.

The conduit coupling establishes the securing of the first conduit coupling member to the second conduit coupling member by clamping the receiving collar and the coupling section together. To provide a proper, preferably a watertight, connection between the collar and the coupling section these require, and are produced within predefined tolerances. In practice, during prolonged use of the conduit coupling it can get damaged and as a result may fall outside the predefined tolerances. This results in a flawed connection between the first conduit coupling member end and the second conduit coupling member, which is not watertight.

When investigating the flawed connection of the conduit coupling, the inventers surprisingly found that in a majority of cases the receiving collar is the cause of the flawed connection as it was damaged to such an extent that it fell outside the tolerance. The inventors presume that this is because the first conduit coupling member comprises the claws of the securing arrangement and is therefore heavier than the second conduit coupling member. Due to the higher weight of the first conduit coupling member, when it gets dropped on the floor surface, the impact on the receiving collar is higher as compared to the impact on the coupling section of the second conduit coupling member. As a result the damage caused by a fall to the receiving collar is more severe as compared to the damage caused by a fall to the coupling section.

When further investigating the damaged receiving collars of the first conduit coupling member the inventors surprisingly found that two areas of the receiving collar got most frequently damaged. These areas lie for the most part, in a circumferential direction, between the securing members at respective opposite sides of the receiving collar with respect to the longitudinal center axis. The inventors presume that the claws that are provided at the outer surface of the tube at opposite sides thereof, and that extend over the receiving collar and beyond the distal edge, protect or guard the receiving collar, when it gets dropped on the floor surface, at the area near the claws.

The inventors realized that in order to provide a conduit coupling that is less prone to damage they need to reduce the chance that the areas of the receiving collar that get most frequently damaged, get damaged. The inventors achieve this by applying a guard block on the receiving collar at or near these areas of the receiving collar, near, adjacent to, or at the distal edge, and in a circumferential direction, between the securing members. The added material of the guard block provides added stiffness to the receiving collar, at least in the area at or near the guard block. The added stiffness provides increased resistance against damage of the receiving collar at or near these areas, especially when the receiving collar drops on the floor surface at or near these areas.

In an embodiment the guard block merges into or is provided adjacent to or near the distal edge. By providing the guard block adjacent to or near the distal edge, the guard block specifically provides added stiffness and increased resistance against damage to the distal edge of the receiving collar. As the distal edge is the most fragile part of the receiving collar this further reduces the risk of the conduit coupling getting damaged.

In an embodiment the guard block protrudes outwardly from the receiving collar beyond the circumferential apex. As the convex receiving collar protrudes from the first coupling member, the receiving collar will more likely get damaged at or near the apex thereof. When the guard block protrudes beyond the apex, the guard block provides increased resistance against damage of the receiving collar near the apex, especially when the receiving collar drops on the floor surface near these areas.

In an embodiment the guard block comprises a support surface facing away from the receiving collar. In an embodiment thereof the support surface extends parallel to the longitudinal center axis. The conduit coupling and/or the conduit coupling member can be placed with the support surface on a surface, for instance the floor surface. The support surface provides a stable base so that the conduit coupling and/or the conduit coupling member is less likely to tumble over, to get dropped and as a result to get damaged.

In an embodiment the guard block has a rectangular outline. In an embodiment the guard block extends along 2-10% of the circumference of the receiving collar, preferably along 50 of the circumference of the receiving collar. The guard blocks extend in the longitudinal direction thereof along the circumference of the first coupling end. The longitudinal length of the rectangular guard blocks can be adjusted according to the size of the area of the coupling end that gets most frequently damaged.

In a preferred embodiment the first conduit coupling member comprises two guard blocks that are provided at opposite sides of the longitudinal center axis. In an embodiment both guard blocks comprise a support surface, and the respective support surfaces extend parallel to each other. In an embodiment the two guard blocks are identical to each other. By providing two guard blocks the resistance against damage of the receiving collar is further increased.

In an embodiment the conduit coupling comprises the second conduit coupling member, wherein the second conduit coupling member comprises a second coupling tube that has a coupling section facing the receiving collar, and a circumferential engagement ridge that protrudes outwardly from the outer surface of the second coupling tube, and wherein the claws are configured for engaging the engagement ridge for securing the first conduit coupling member to the second conduit coupling member.

According to a second aspect, the invention provides a conduit coupling member for use in the conduit coupling according to any one of the aforementioned embodiments, wherein the conduit coupling member comprises a coupling tube with a longitudinal center axis, and that merges into a circumferential receiving collar, and a circumferential distal edge that defines a receiving opening towards the receiving collar, wherein the conduit coupling member comprises at least one guard block on the receiving collar to reinforce the receiving collar, wherein the at least one guard block outwardly protrudes with respect to the receiving collar, wherein the receiving collar is convex in a direction away from the longitudinal center axis, and has a circumferential apex at a distance from the distal edge, wherein the guard block is provided between the apex and the distal edge, and wherein the guard block has a rectangular outline.

According to a third aspect, the invention provides a conduit comprising the conduit coupling or the conduit coupling member according to any one of the aforementioned embodiments.

The conduit coupling member and the conduit relate to the conduit coupling according to any one of the aforementioned embodiments and thus have at least the same technical advantages, which will not be repeated hereafter.

It is observed that DE 82 29 357 U1 discloses a tube coupling having an inlet and two hooks on a ringshaped bracket. The bracket is supported by two bearings that are formed behind the inlet. These bearings do not protect or guard the projecting outlet.

DE 36 13 330 A1 discloses a pipe coupling having a coupling head with two hook arms and a freely mounted clamping ring.

US 2006/131876 A1 discloses a coupler having two hooks at a clamping sleeve.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1A and 1B are isometric views from respective opposite sides of a conduit coupling according to the invention having a first coupling member, and a second coupling member;
Figure 2 is a transverse view of the first coupling member of figures 1A and 1B; and
Figure 3 is a longitudinal section view of the conduit coupling of figures 1A and 1B.

### DETAILED DESCRIPTION OF THE INVENTION

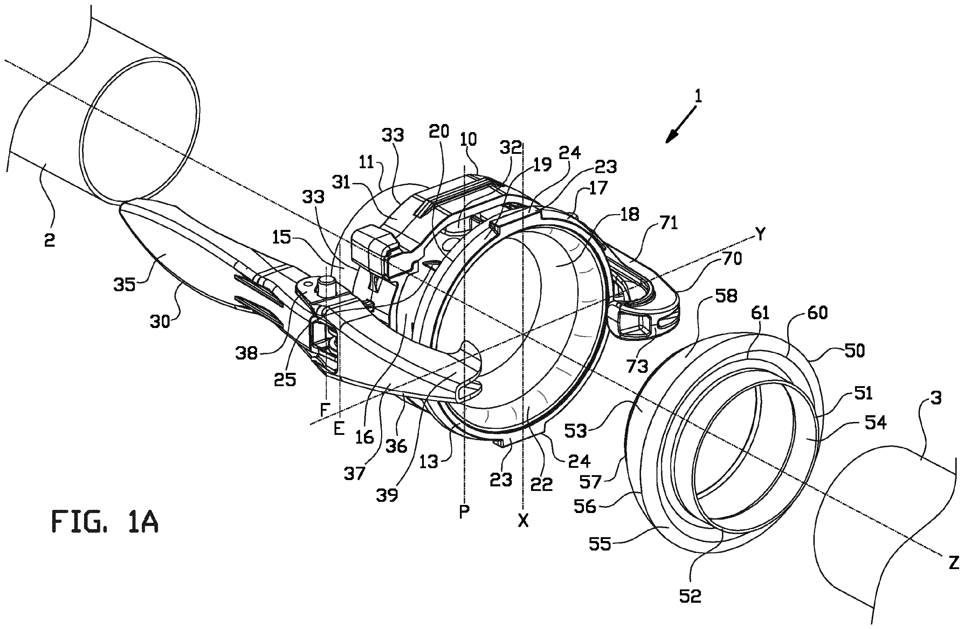

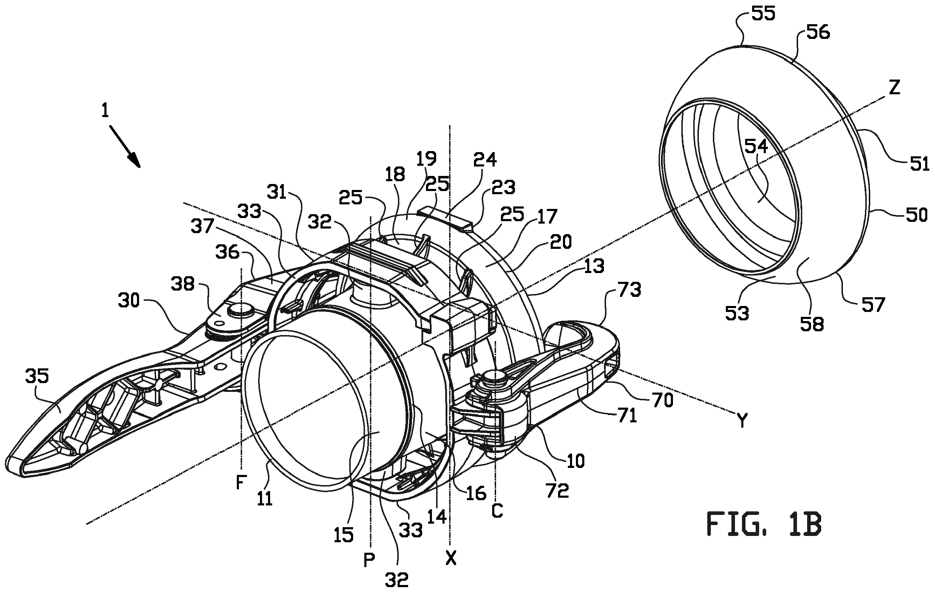

Figures 1A and 1B show a conduit coupling 1 for coupling a first conduit section 2 to a second conduit section 3. The conduit coupling 1 comprises a first conduit coupling member 10 that is connected, connectable to or merges into the first conduit section 2, and a second conduit coupling member 50 that is connected, connectable to or merges into the second conduit section 3. The conduit coupling 1 comprises a securing arrangement or clamping arrangement 30 in order to couple the first conduit section 2 to the second conduit section 3. The conduit sections 2, 3 can be a hose, tube or pipe and may be part of or integrated with an adapter piece or equipment such as a pump, a turbine or a valve, or couplings such as bends, T-pieces, Y-pieces or reducers.

The first conduit coupling member 10 comprises a first coupling tube 11 with a center axis that coincides with a longitudinal center axis Z of the conduit coupling 1. On the outer surface of the first coupling tube 11 a circumferential ridge 14 is formed that divides the first coupling tube 11 in a first connecting section 15 and a first coupling section 16.

The first connecting section 15 and most part of the first coupling section 16 of the first coupling tube 11 has a substantially constant diameter. The first coupling section 16 comprises or merges into a circumferential receiving collar 17 for receiving a distal end of the second conduit coupling member 50. The receiving collar 17 terminates in a circumferential distal edge 13 that is located in a notional first plane XY that is substantially transverse to the center axis Z. In this example the distal edge forms a distal end face in the notional first plane XY. The receiving collar 17 is generally convex outwards and has a proximal section 18 that is curved and flared away from the center axis Z. The proximal section 18 merges, via a circumferential first apex 20 into a distal section 19 that is curved back towards the center axis Z.

The receiving collar 17 defines a circumferential gasket seat 21 that encloses a ring shaped gasket 22 that has, in its normal state, a circular cross section. The first coupling tube 11 comprises multiple reinforcing ribs 25 that extend at the proximal section 18 of the receiving collar 17, substantially parallel to the center axis Z.

The second conduit coupling member 50 comprises a second coupling tube 51 having a center axis that, in a coupled state of the conduit coupling 1, coincides with the longitudinal center axis Z of the conduit coupling 1. The second coupling tube 51 comprises a second connecting section 54 that merges into an opposite second coupling section 53.

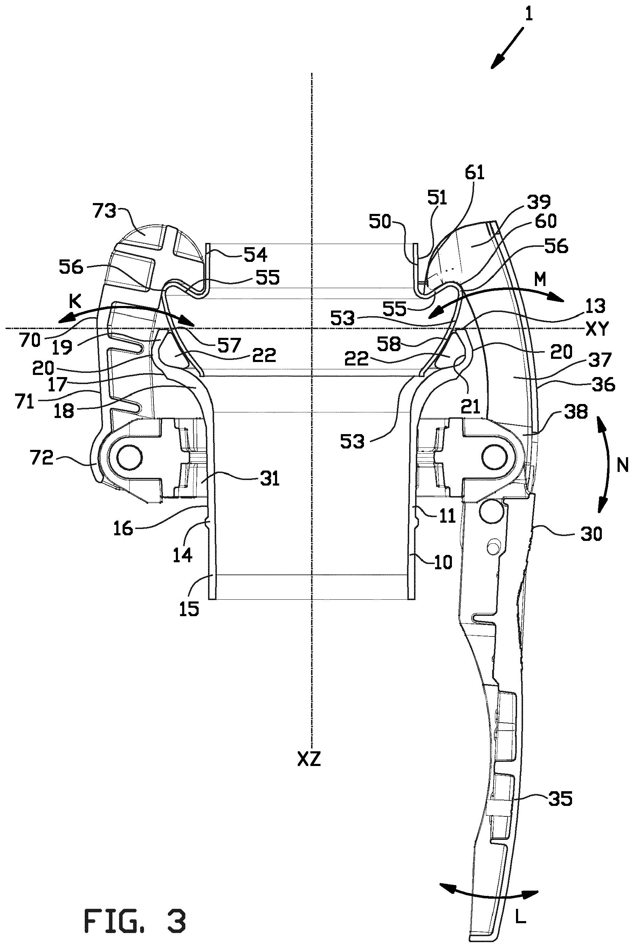

As best shown in figure 3, in a section view of the conduit coupling 1, the second connecting section 54 is substantially straight and extends parallel to the center axis Z. The second coupling section 53 comprises an engaging or clamping section 55 that, from the second connecting section 54, curves away from the center axis Z over more than 90 degrees so that the clamping section 55 extends outwardly from the second connecting section 54 obliquely away from the center axis Z. The clamping section 55 further curves back in the opposite direction to a circumferential second apex 56. At the second apex 56 the clamping section 55 merges into an abutment section 57 that curves back towards the center axis Z.

The clamping section 55 defines a circumferential engagement ridge or clamping ridge 60 at the outer surface of the second coupling section 53 of the second coupling tube 51. The clamping section 55 defines a circumferential concave clamping gutter 61 at the outer surface of the second coupling section 53. The abutment section 57 defines a circumferential convex outer abutment surface 58 that corresponds to the first coupling section 16 of the first conduit coupling member 10, more particular that corresponds to the gasket 22 thereof.

As shown in figure 1A, 1B, 2 and 3, the clamping arrangement 30 comprises a ring 31 that surrounds the first coupling section 16 of the first coupling tube 11 and that is pivotably connected to the first coupling tube 11. The ring 31 is composed of two substantially identical semicircular ring sections 33 that are connected to or connectable to each other at their respective ends to form the ring 31. Each ring section 33 is pivotably connected to the first coupling tube 11 by a pivot 32. Each pivot 32, in this example, is composed of a socket on the outer surface of the first coupling section 16, and a corresponding cam on the inner surface of the ring section 33 that is received in the socket. The pivots 32 are arranged at two opposite sides of the first coupling tube 11 with respect to the longitudinal center axis Z, such that the ring 31 is pivotable with respect to the first coupling tube 11 around a ring pivot axis P in a ring pivot direction N. The ring pivot axis P is substantially transverse to and intersects the center axis Z.

The clamping arrangement 30 comprises a first securing member or first claw 70 that is provided outside the first coupling tube 11. The first claw 70 is pivotably connected to one of the ring sections 33 of the ring 31, such that the first claw 70 is pivotable with respect to the ring 31, and therefore with respect to the first coupling tube 11, around a first claw pivot axis C in a first claw pivot direction K. The first claw pivot axis C is substantially parallel to the ring pivot axis P.

The first claw 70 comprises a substantially elongate first claw body 71 that at a first base end 72 is pivotably connected to the ring 31, and that at the opposite end merges into a first hook portion 73 that is configured to hook behind the clamping ridge 60 and/or to hook into the clamping gutter 61 for securing the first conduit coupling member 10 to the second conduit coupling member 50.

The clamping arrangement 30 comprises a handle or lever 35 that is pivotably connected to the ring section 33 of the ring 31 opposite to the first claw 70. The lever 35 is pivotable with respect to the ring 31, and therefore with respect to the first coupling tube 11, around a lever pivot axis E in a lever pivot direction L. The lever pivot axis E that is substantially parallel to the ring pivot axis P and to the first claw pivot axis C.

The clamping arrangement 30 comprises a second securing member or second claw 36 that is provided outside the first coupling tube 11. The second claw 36 is pivotably connected to the lever 35, such that the second claw 36 is pivotable with respect to the lever 35, and therefore with respect to the ring 31 and the first coupling tube 11, around a second claw pivot axis F in a second claw pivot direction M. The second claw pivot axis F is substantially parallel to the ring pivot axis P, to the first claw pivot axis C, and to the lever pivot axis E. The second claw pivot axis F is spaced apart from the lever pivot axis E.

The second claw 36 comprises a substantially elongate second claw body 37 that at a second base end 38 is pivotably connected to the ring 31, and that at the opposite end merges into a second hook portion 39 that is configured to hook behind the clamping ridge 60 and/or to hook into the clamping gutter 61.

The first conduit coupling member 10 and the second coupling member 50 can be secured or clamped to each other in a way that is known per se. Firstly the abutment section 57 is received in the receiving collar 17, with the outer abutment surface 58 abutted against the gasket 22. Secondly the first claw 70 and the second claw 36 are engaged with the engaging section 55. Lastly the lever 35 is pivoted towards the first coupling tube 11 to therewith clamp the outer abutment surface 58 tightly against the gasket 22 to form a watertight connection.

In this example, the first conduit section 2 is connected to the first conduit coupling member 10 by sliding it around the first connecting section 15 up to the ridge 14. The first conduit section 2 can be further secured to the first conduit coupling member 10 by gluing it to the first connecting section 15, by clamping it around the first connecting section 15, for instance using a hose clamp, or by welding. The second conduit section 3 can be coupled to the second conduit coupling member 50 in a similar fashion.

The first conduit coupling member 10 comprises, in this example, two guard blocks 23 on the receiving collar 17. The guard blocks 23 are provided at and merge at their base into the receiving collar 17 near or adjacent to the distal edge 13 of the receiving collar 17. The guard blocks 23 protrude outwardly with respect to the receiving collar 17, away from the center axis Z substantially parallel to and in or adjacent to the notional first plane XY of the distal edge 13. The respective guard blocks 23 are provided at two opposite sides of the first coupling tube 11 with respect to the center axis Z. The respective guard blocks 23 are provided, in a circumferential direction of the receiving collar 17, between the first claw 70 and the second claw 36. The two guard blocks 23 are in particular arranged between the circumferential first apex 20 and the distal edge 13. Each guard block 23 extends along 2-10% of the circumference of the receiving collar 17, preferably each guard block 23 extends along approximately 5% of the circumference of the receiving collar 17.

The guard blocks 23 reinforce the receiving collar 17, at least at or near the location of the guard blocks 23. The guard blocks 23 have a rectangular shaped outline. The guard blocks 23 comprise a straight or plane rectangular support surface 24 that faces away from the collar, that is parallel to the longitudinal center axis Z, and that extends along a part of the circumference of the receiving collar 17.

As best shown in figures 1A and 1B, the first claw 70 and the second claw 36 are provided at opposite sides of the first coupling tube 11 with respect to the center axis Z, and lie in a common notional second plane YZ that is parallel to and coincides with the center axis Z and that is transverse to the first plane XY. The first claw 70 and the second claw 36 extend over the first apex 20 of the receiving collar 17, through the notional first plane XY, and beyond the distal edge 13.

The guard blocks 23 lie in a common notional third plane XZ that is parallel to and coincides with the longitudinal center axis Z and that is transverse to the first plane XY and to the second plane YZ. The notional second plane YZ and the notional third plane XZ intersect along the center axis Z. The respective pivots 32 are aligned with the respective guard blocks 23 in the notional third plane XZ.

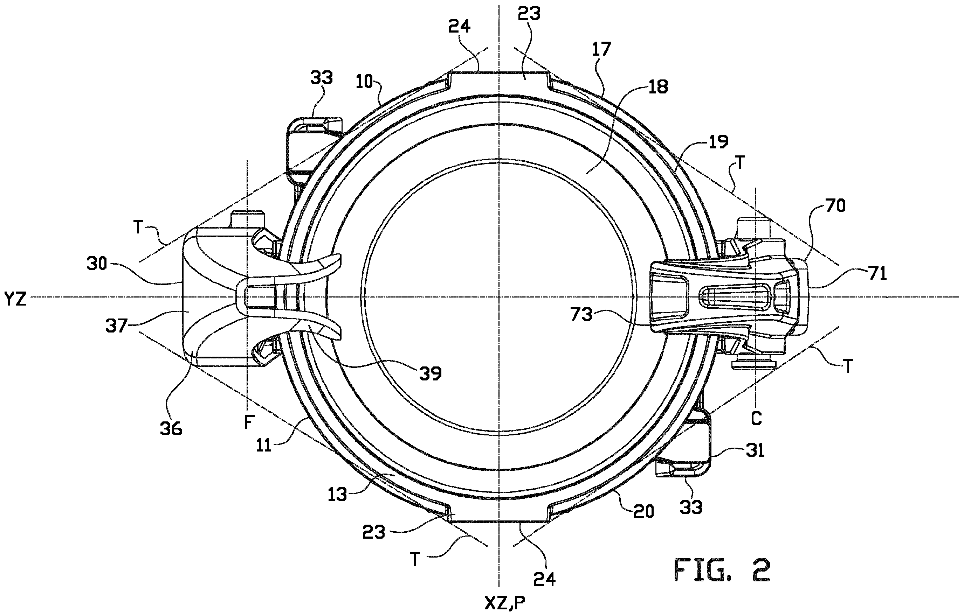

Figure 2 is a transverse view of the first conduit coupling member 10 showing the distal edge 13 thereof. By means of lines T notional straight support planes, such as a floor surface, that are parallel to the center axis Z are indicated. The lines T extend between respective extremities of the first claw 70, the second claw 36 and the guard blocks 23. The lines T do not intersect the distal edge 13. This means that the guard blocks 23 in cooperation with the first claw 70 and the second claw 36 protect the distal edge 13, which is the most fragile part of the conduit coupling 1, when the first conduit coupling member 10 is resting on the floor. In other words, the guard blocks 23, the first claw 70 and the second claw 36 are arranged such that together they protect the distal edge 13.

It is to be understood that the above description is included to illustrate the operation of the preferred embodiments and is not meant to limit the scope of the invention.

## Claims

1. Conduit coupling (1) for coupling a first conduit section (2) and a second conduit section (3), wherein the conduit coupling comprises a first conduit coupling member (10) configured for being arranged on the first conduit section, and a securing arrangement (30) for securing the first conduit coupling member to a second conduit coupling member (50) on the second conduit section,
wherein the first conduit coupling member (10) comprises a first coupling tube (11) with a longitudinal center axis (Z), and that merges into a circumferential receiving collar (17) for receiving a distal end of the second conduit coupling member (50), and a circumferential distal edge (13) that defines a receiving opening towards the receiving collar (17),
wherein the securing arrangement (30) comprises two claws (70; 36) that are provided outside the first coupling tube (11) at opposite sides of the longitudinal center axis (Z), wherein the respective claws extend over the receiving collar (17) and beyond the distal edge (13),
wherein the first conduit coupling member (10) comprises at least one guard block (23) on the receiving collar (17) to reinforce the receiving collar, wherein the at least one guard block outwardly protrudes with respect to the receiving collar, and is provided in a circumferential direction of the receiving collar between the respective claws (70; 36), wherein the receiving collar (17) is convex in a direction away from the longitudinal center axis (Z), and has a circumferential apex (20) at a distance from the distal edge (13), **characterized in that** the guard block (23) is provided between the apex (20) and the distal edge (13).

2. Conduit coupling (1) according to claim 1, wherein the guard block (23) protrudes outwardly from the receiving collar (17) beyond the circumferential apex (20).

3. Conduit coupling (1) according to any one of the preceding claims, wherein the guard block (24) merges into or is provided adjacent to or near the distal edge (13) .

4. Conduit coupling (1) according to any one of the preceding claims, wherein the guard block (23) has a rectangular outline.

5. Conduit coupling (1) according to any one of the preceding claims, wherein the guard block (23) comprises a support surface (24) facing away from the receiving collar.

6. Conduit coupling (1) according to claim 5, wherein the support surface (24) extends parallel to the longitudinal center axis (Z).

7. Conduit coupling (1) according to any one of the preceding claims, wherein the guard block (23) extends along 2-10% of the circumference of the receiving collar (17), preferably along 5% of the circumference of the receiving collar.

8. Conduit coupling (1) according to any one of the preceding claims, wherein the first conduit coupling member comprises two guard blocks that are provided at opposite sides of the longitudinal center axis.

9. Conduit coupling (1) according to claim 8 in combination with claim 5 or 6, wherein both guard blocks (23) comprise a support surface (24), and wherein the respective support surfaces extend parallel to each other.

10. Conduit coupling (1) according to claim 8 or 9, wherein the two guard blocks (23) are identical to each other.

11. Conduit coupling (1) according to any one of the preceding claims, wherein the conduit coupling comprises the second conduit coupling member (50), wherein the second conduit coupling member comprises a second coupling tube (51) that has a coupling section (54) facing the receiving collar (17), and a circumferential engagement ridge (60) that protrudes outwardly from the outer surface of the second coupling tube, and wherein the claws (70; 36) are configured for engaging the engagement ridge for securing the first conduit coupling member to the second conduit coupling member.

12. Conduit coupling member (10) for use in the conduit coupling (1) according to any one of the claims 1-11,
wherein the conduit coupling member comprises a coupling tube (11) with a longitudinal center axis (Z), and that merges into a circumferential receiving collar (17), and a circumferential distal edge (13) that defines a receiving opening towards the receiving collar,
wherein the conduit coupling member (10) comprises at least one guard block (23) on the receiving collar to reinforce the receiving collar, wherein the at least one guard block outwardly protrudes with respect to the receiving collar, wherein the receiving collar (17) is convex in a direction away from the longitudinal center axis (Z), and has a circumferential apex (20) at a distance from the distal edge (13), wherein the guard block (23) is provided between the apex (20) and the distal edge (13), **characterized in that** the guard block (23) has a rectangular outline.

13. Conduit comprising the conduit coupling (1) according to any one of the claims 1-11 or the conduit coupling member (10) according to claim 12.

## Patentansprüche

1. Leitungskupplung (1) zum Koppeln eines ersten Leitungsabschnitts (2) und eines zweiten Leitungsabschnitts (3), wobei die Leitungskupplung ein erstes Leitungskopplungselement (10), das konfiguriert ist, um an dem ersten Leitungsabschnitt angeordnet zu werden, und eine Sicherungsanordnung (30) zum Sichern des ersten Leitungskopplungselements an einem zweiten Leitungskopplungselement (50) an dem zweiten Leitungsabschnitt umfasst,
wobei das erste Leitungskopplungselement (10) ein erstes Kopplungsrohr (11) mit einer Längsmittelachse (Z), das in einen umlaufenden Aufnahmekragen (17) zum Aufnehmen eines distalen Endes des zweiten Leitungskopplungselements (50) übergeht, und einen umlaufenden distalen Rand (13), der eine Aufnahmeöffnung zu dem Aufnahmekragen (17) definiert, umfasst,
wobei die Sicherungsanordnung (30) zwei Klauen (70; 36) umfasst, die außerhalb des ersten Kopplungsrohrs (11) an gegenüberliegenden Seiten der Längsmittelachse (Z) bereitgestellt sind, wobei sich die jeweiligen Klauen über den Aufnahmekragen (17) und über den distalen Rand (13) hinaus erstrecken,
wobei das erste Leitungskopplungselement (10) mindestens einen Schutzblock (23) an dem Aufnahmekragen (17) zum Verstärken des Aufnahmekragens umfasst, wobei der mindestens eine Schutzblock in Bezug auf den Aufnahmekragen nach außen vorsteht und in einer Umfangsrichtung des Aufnahmekragens zwischen den jeweiligen Klauen (70; 36) bereitgestellt ist, wobei der Aufnahmekragen (17) in einer Richtung weg von der Längsmittelachse (Z) konvex ist und einen umlaufenden Scheitel (20) in einem Abstand von dem distalen Rand (13) aufweist, **dadurch gekennzeichnet, dass** der Schutzblock (23) zwischen dem Scheitel (20) und dem distalen Rand (13) bereitgestellt ist.

2. Leitungskupplung (1) nach Anspruch 1, wobei der Schutzblock (23) von dem Aufnahmekragen (17) über den umlaufenden Scheitel (20) hinaus nach außen vorsteht.

3. Leitungskupplung (1) nach einem der vorhergehenden Ansprüche, wobei der Schutzblock (24) in den distalen Rand (13) übergeht oder angrenzend an diesen oder nahe an diesem bereitgestellt ist.

4. Leitungskupplung (1) nach einem der vorhergehenden Ansprüche, wobei der Schutzblock (23) einen rechteckigen Umriss aufweist.

5. Leitungskupplung (1) nach einem der vorhergehenden Ansprüche, wobei der Schutzblock (23) eine Stützfläche (24) umfasst, die von dem Aufnahmekragen weg weist.

6. Leitungskupplung (1) nach Anspruch 5, wobei sich die Stützfläche (24) parallel zu der Längsmittelachse (Z) erstreckt.

7. Leitungskupplung (1) nach einem der vorhergehenden Ansprüche, wobei sich der Schutzblock (23) entlang 2-10 % des Umfangs des Aufnahmekragens (17), vorzugsweise entlang 5 % des Umfangs des Aufnahmekragens, erstreckt.

8. Leitungskupplung (1) nach einem der vorhergehenden Ansprüche, wobei das erste Leitungskopplungselement zwei Schutzblöcke umfasst, die an gegenüberliegenden Seiten der Längsmittelachse bereitgestellt sind.

9. Leitungskupplung (1) nach Anspruch 8 in Kombination mit Anspruch 5 oder 6, wobei beide Schutzblöcke (23) eine Stützfläche (24) umfassen und wobei sich die jeweiligen Stützflächen parallel zueinander erstrecken.

10. Leitungskupplung (1) nach Anspruch 8 oder 9, wobei die zwei Schutzblöcke (23) identisch zueinander sind.

11. Leitungskupplung (1) nach einem der vorhergehenden Ansprüche, wobei die Leitungskupplung das zweite Leitungskopplungselement (50) umfasst, wobei das zweite Leitungskopplungselement ein zweites Kopplungsrohr (51), das einen Kopplungsabschnitt (54) aufweist, der zu dem Aufnahmekragen (17) weist, und eine umlaufende Eingriffsrippe (60), die von der Außenfläche des zweiten Kopplungsrohrs nach außen vorsteht, umfasst und wobei die Klauen (70; 36) konfiguriert sind, um in die Eingriffsrippe einzugreifen, um das erste Leitungskopplungselement an dem zweiten Leitungskopplungselement zu sichern.

12. Leitungskopplungselement (10) zur Verwendung in der Leitungskupplung (1) nach einem der Ansprüche 1-11,
wobei das Leitungskopplungselement ein Kopplungsrohr (11) mit einer Längsmittelachse (Z), das in einen umlaufenden Aufnahmekragen (17) übergeht, und einen umlaufenden distalen Rand (13), der eine Aufnahmeöffnung zu dem Aufnahmekragen definiert, umfasst,
wobei das Leitungskopplungselement (10) mindestens einen Schutzblock (23) an dem Aufnahmekragen zum Verstärken des Aufnahmekragens umfasst, wobei der mindestens eine Schutzblock in Bezug auf den Aufnahmekragen nach außen vorsteht, wobei der Aufnahmekragen (17) in einer Richtung weg von der Längsmittelachse (Z) konvex ist und einen umlaufenden Scheitel (20) in einem Abstand von dem distalen Rand (13) aufweist, wobei der Schutzblock (23) zwischen dem Scheitel (20) und dem distalen Rand (13) bereitgestellt ist, **dadurch gekennzeichnet, dass** der Schutzblock (23) einen rechteckigen Umriss aufweist.

13. Leitung, umfassend die Leitungskupplung (1) nach einem der Ansprüche 1-11 oder das Leitungskopplungselement (10) nach Anspruch 12.

## Revendications

1. Raccord de conduit (1) pour raccorder une première section de conduit (2) et une deuxième section de conduit (3), dans lequel le raccord de conduit comprend un premier élément de raccord de conduit (10) configuré pour être agencé sur la première section de conduit, et un agencement de fixation (30) pour fixer le premier élément de raccord de conduit à un deuxième élément de raccord de conduit (50) sur la deuxième section de conduit,
dans lequel le premier élément de raccord de conduit (10) comprend un premier tube de raccord (11) avec un axe central longitudinal (Z), et qui fusionne avec un collier de réception circonférentiel (17) pour recevoir une extrémité distale du deuxième élément de raccord de conduit (50), et une extrémité distale circonférentielle (13) qui définit une ouverture de réception vers le collier de réception (17),
dans lequel l'agencement de fixation (30) comprend deux griffes (70 ; 36) qui sont disposées à l'extérieur du premier tube de raccord (11) sur des côtés opposés de l'axe central longitudinal (Z), dans lequel les griffes respectives s'étendent sur le collier de réception (17) et au-delà de l'extrémité distale (13),
dans lequel le premier élément de raccord de conduit (10) comprend au moins un bloc de protection (23) sur le collier de réception (17) pour renforcer le collier de réception, dans lequel l'au moins un bloc de protection fait saillie vers l'extérieur par rapport au collier de réception, et est disposé dans une direction circonférentielle du collier de réception entre les griffes (70 ; 36) respectives, dans lequel le collier de réception (17) est convexe dans une direction s'éloignant de l'axe central longitudinal (Z), et a un sommet circonférentiel (20) à une certaine distance de l'extrémité distale (13), **caractérisé en ce que** le bloc de protection (23) est disposé entre le sommet (20) et l'extrémité distale (13).

2. Raccord de conduit (1) selon la revendication 1, dans lequel le bloc de protection (23) fait saillie vers l'extérieur à partir du collier de réception (17) au-delà du sommet circonférentiel (20).

3. Raccord de conduit (1) selon l'une quelconque des revendications précédentes, dans lequel le bloc de protection (24) fusionne avec l'extrémité distale (13) ou est disposé de manière adjacente à celle-ci ou à proximité de celle-ci.

4. Raccord de conduit (1) selon l'une quelconque des revendications précédentes, dans lequel le bloc de protection (23) a un contour rectangulaire.

5. Raccord de conduit (1) selon l'une quelconque des revendications précédentes, dans lequel le bloc de protection (23) comprend une surface de support (24) orientée à l'opposé du collier de réception.

6. Raccord de conduit (1) selon la revendication 5, dans lequel la surface de support (24) s'étend parallèlement à l'axe central longitudinal (Z).

7. Raccord de conduit (1) selon l'une quelconque des revendications précédentes, dans lequel le bloc de protection (23) s'étend le long de 2 à 10 % de la circonférence du collier de réception (17), de préférence le long de 5 % de la circonférence du collier de réception.

8. Raccord de conduit (1) selon l'une quelconque des revendications précédentes, dans lequel le premier élément de raccord de conduit comprend deux blocs de protection qui sont disposés sur des côtés opposés de l'axe central longitudinal.

9. Raccord de conduit (1) selon la revendication 8 en combinaison avec la revendication 5 ou 6, dans lequel les blocs de protection (23) comprennent une surface de support (24), et dans lequel les surfaces de support respectives s'étendent parallèlement l'une à l'autre.

10. Raccord de conduit (1) selon la revendication 8 ou 9, dans lequel les deux blocs de protection (23) sont identiques l'un à l'autre.

11. Raccord de conduit (1) selon l'une quelconque des revendications précédentes, dans lequel le raccord de conduit comprend le deuxième élément de raccord de conduit (50), dans lequel le deuxième élément de raccord de conduit comprend un deuxième tube de raccord (51) qui a une section de raccord (54) faisant face au collier de réception (17), et une nervure de mise en prise circonférentielle (60) qui fait saillie vers l'extérieur à partir de la surface externe du deuxième tube de raccord, et dans lequel les griffes (70 ; 36) sont configurées pour venir en prise avec la nervure de mise en prise afin de fixer le premier élément de raccord de conduit au deuxième élément de raccord de conduit.

12. Élément de raccord de conduit (10) pour une utilisation dans le raccord de conduit (1) selon l'une quelconque des revendications 1 à 11,
dans lequel l'élément de raccord de conduit comprend un tube de raccord (11) avec un axe central longitudinal (Z), et qui fusionne avec un collier de réception circonférentiel (17), et une extrémité distale circonférentielle (13) qui définit une ouverture de réception vers le collier de réception,
dans lequel l'élément de raccord de conduit (10) comprend au moins un bloc de protection (23) sur le collier de réception pour renforcer le collier de réception, dans lequel l'au moins un bloc de protection fait saillie vers l'extérieur par rapport au collier de réception, dans lequel le collier de réception (17) est convexe dans une direction s'éloignant de l'axe central longitudinal (Z), et a un sommet circonférentiel (20) à une certaine distance de l'extrémité distale (13), dans lequel le bloc de protection (23) est disposé entre le sommet (20) et l'extrémité distale (13), **caractérisé en ce que** le bloc de protection (23) a un contour rectangulaire.

13. Conduit comprenant le raccord de conduit (1) selon l'une quelconque des revendications 1 à 11 ou l'élément de raccord de conduit (10) selon la revendication 12.
